# EUROPEAN PATENT SPECIFICATION

(11) **EP 4 279 760 B1**
(45) Date of publication and mention of the grant of the patent: **21.01.2026**
(21) Application number: 22173965.9
(22) Date of filing: 18.05.2022
(51) Int. Cl.: F16D 41/28, F16D 1/08

(54) **HUB DEVICE**
NABENVORRICHTUNG
DISPOSITIF DE MOYEU

(43) Date of publication of application: 22.11.2023
(73) Proprietor: Lee, Chung-Che, Taichung City 436 (TW)
(72) Inventor: Lee, Chung-Che, Taichung City 436 (TW)
(74) Representative: Lang, Christian

(56) References cited:
- TW-A- 201 404 655
- US-A1- 2014 166 421

## Description

### BACKGROUND OF THE INVENTION

### Field of the Invention

The present invention relates to a hub device.

### Description of the Prior Art

In a conventional hub device, such as disclosed in document TW M488455 U, the ratchet ring is arranged on the inner wall of the receiving space of a hub shell, the inner surface of the ratchet ring has a plurality of teeth, the outer wall of the ratchet ring has an external thread portion, the inner wall of the hub shell has an inner thread portion which is screwed with the outer thread portion so that the ratchet ring is fixed on the inner wall of the hub shell.

The hub shell is usually made of aluminum alloy, and the ratchet ring is made of iron. When the ratchet ring drives the hub shell to rotate, the inner thread of the hub shell is easily worn so that the combined structure of the ratchet ring and the hub shell is weak and not durable. In addition, the depth of the thread groove of the inner thread portion is shallow, so it cannot bear large torsion force. As a result, it is not suitable to be applied for a device requiring large torsion force (such as an electric vehicle).

Another conventional hub device as defined in the preamble of claim 1 is known from document TW 201 404 655 A, which discloses a clutch-type driving system for a bicycle wheel hub, comprising a hub base, a sleeve base disposed inside the hub base, a wheel axle base disposed and penetrated between the hub base and the sleeve base, and having a ratchet seat passing through its center, and a clutch driving device disposed between each of ratchet seat and the hub base.

The present invention is arisen to obviate or at least mitigate the above-mentioned disadvantages.

### SUMMARY OF THE INVENTION

The main object of the present invention is to provide a hub device which is capable of providing good resistivity against the active force in the axial direction and which is durable.

To achieve the above and other objects, a hub device as defined in claim 1 is provided, including: a hub shell, defining an axial direction, including a room and a projection, the room having an opening open in the axial direction, an inner wall of the room being integrally connected with the projection, the room further including an annular toothed portion, the projection projecting radially within the room; and a ratchet ring, including an outer toothed portion and an engaging slot corresponding to the projection, the ratchet ring being disposing in the room, the outer toothed portion being engaged with the annular toothed portion so that the ratchet ring is rotatable with the hub shell, the engaging slot being disposed on the ratchet ring, the projection being engaged radially within the engaging slot and abutted radially against the hub shell.

The present invention will become more obvious from the following description when taken in connection with the accompanying drawings, which show, for purpose of illustrations only, the preferred embodiment(s) in accordance with the present invention as defined by the appended claims.

### BRIEF DESCRIPTION OF THE DRAWINGS

Fig. 1 is a stereogram of a preferable embodiment of the present invention;
Fig. 2 is a breakdown drawing of a preferable embodiment of the present invention;
Fig. 3 is a cross-sectional view of a preferable embodiment of the present invention;
Fig. 4 is an enlargement of Fig. 3;
Fig. 5 is another cross-sectional view of a preferable embodiment of the present invention;
Fig. 6 is a drawing showing a projection and an engaging slot before engaged according to a preferable embodiment of the present invention;
Fig. 7 is a partial enlargement of Fig. 6; and
Fig. 8 is a drawing showing the projection and the engaging slot after engaged according to a preferable embodiment of the present invention.

### DETAILED DESCRIPTION OF THE PREFERRED EMBODIMENTS

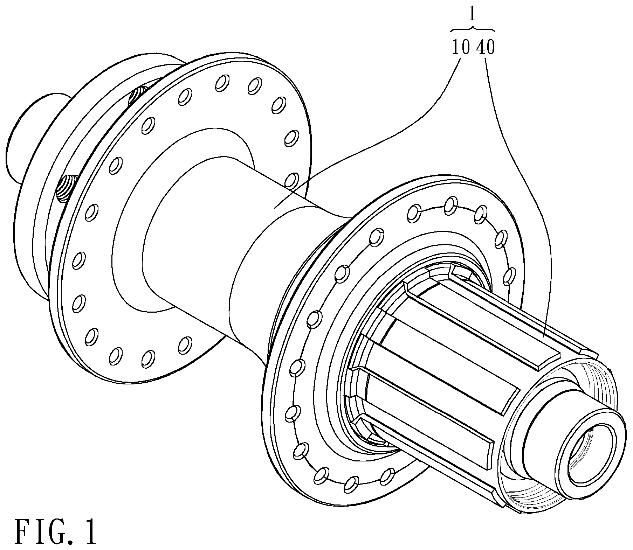

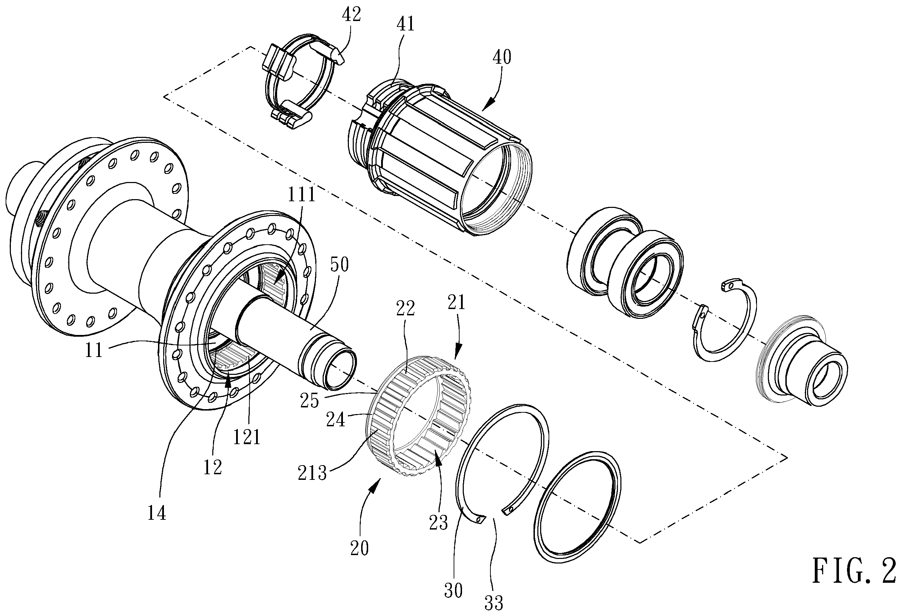

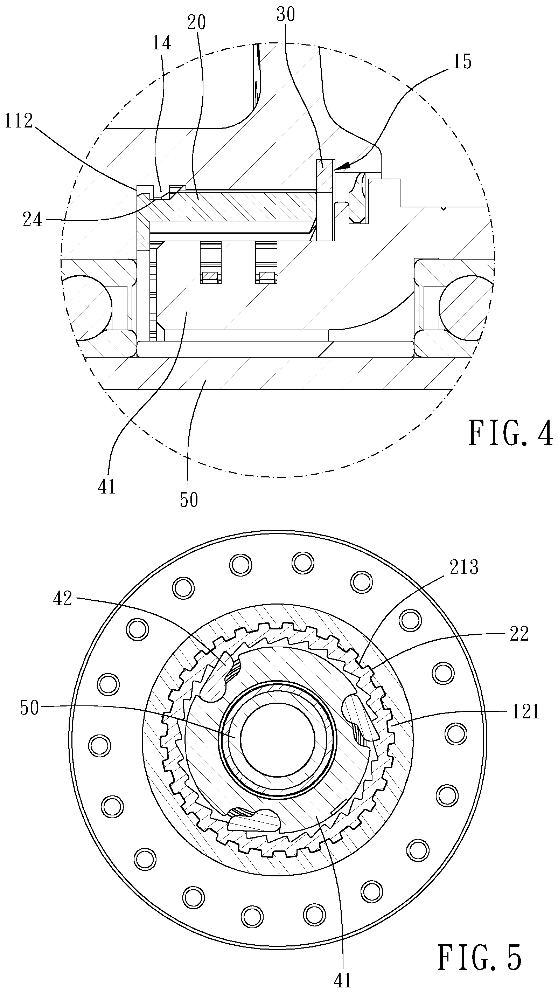

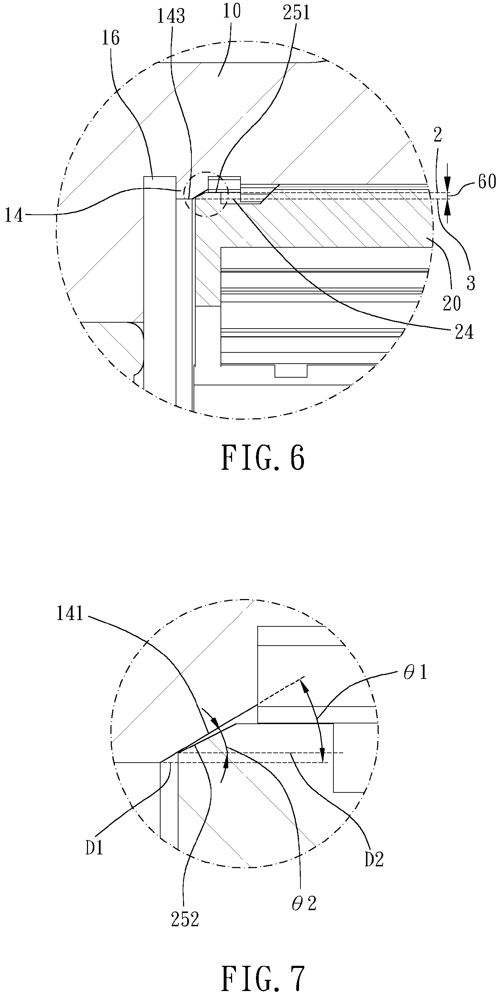

Please refer to Figs. 1 to 8 for a preferable embodiment of the present invention. A hub device 1 of the present invention includes a hub shell 10 and a ratchet ring 20.

The hub shell 10 defines an axial direction A, the hub shell 10 includes a room 11 and a projection 14, the room 11 has an opening 111 open in the axial direction A, an inner wall of the room 11 is integrally connected with the projection 14, the room 11 further includes an annular toothed portion 12, and the projection 14 projects radially within the room 11. The ratchet ring 20 includes an outer toothed portion 21 and an engaging slot 24 corresponding to the projection 14, the ratchet ring 20 is disposing in the room 11, and the outer toothed portion 21 is engaged with the annular toothed portion 12 so that the ratchet ring 20 is rotatable with the hub shell 10. The engaging slot 24 is disposed on the ratchet ring 20, and the projection 14 is engaged radially within the engaging slot 24 and abutted radially against the hub shell 10. Whereby, the hub device 1 is capable of bearing large torsion force and durable, and it provides good and stable combination which is capable of providing good resistivity against the active force in the axial direction A and which is durable because of the engagement of the projection 14 and the engaging slot 24.

The hub shell 10 defines a central axis parallel to the axial direction A, and the projection 14 is an annular flange around the central axis. The projection 14 is preferably a closed annular flange; however, the projection 14 may include a plurality of projections or ribs circumferentially arranged in intervals on the hub shell 10. The engaging slot 24 is an annular concave around the central axis, which enhances combinational strength and is easy to assemble.

The hub shell 10 is made of a first metal material, the ratchet ring 20 is made of a second metal material, and the hardness of the second metal material is larger than the hardness of the first metal material. In this embodiment, the first metal material is made of aluminum alloy, and the second metal material is made of iron, which is advantageous for assembling of the ratchet ring 20 and engagement of the projection 14 within the engaging slot 24. The ratchet ring 20 further includes a protrusion 25 radially protruding outward, the protrusion 25 and the projection 14 are axially blocked with each other, and the protrusion 25 and the outer toothed portion 21 form the engaging slot 24 therebetween. The protrusion 25 and the projection 14 are at least partially overlap with each other in the axial direction A or circumferentially blocked with each other so that it is not easy to disassemble in the axial direction A and so that the projection 14 can be stably positioned within the engaging slot 24.

The projection 14 includes an inclined surface 141 which extends inclinedly toward the opening 111, the protrusion 25 includes an inclined abutting surface 252, and the inclined abutting surface 252 extends inclinedly in a direction away from the opening 111 and is abuttable against the inclined surface 141 in the axial direction A. In this embodiment, the inclined surface 141 and a first horizontal reference line D1 which is parallel to the axial direction A intersect and define a first included angle θ1 therebetween, the inclined abutting surface 252 and a second horizontal reference line D2 which is parallel to the axial direction A intersect and define a second included angle θ2 therebetween, the first included angle θ1 is larger than the second included angle θ2, and the first included angle θ1 and the second included angle θ2 are smaller than 45 degrees. Preferably, the first included angle θ1 is smaller than 35 degrees, and the second included angle θ2 is smaller than 30 degrees. Preferably, the protrusion 25 further includes an end face 251 transverse to the inclined abutting surface 252, and the projection 14 further includes a bottom end face 143 transverse to the inclined surface 141. The protrusion 25 defines a first line 2 located on and extending axially along the end face 251, the projection 14 defines a second line 3 located on and extending axially along the bottom end face 143, and a distance 60 between the first line 2 and the second line 3 is between 0.10 mm to 0.20 mm. In this embodiment, the protrusion 25 is protrusive radially beyond an outer circumferential surface of the ratchet ring 20 in an extent smaller than an extent in which the projection 14 projects radially from an inner surface of the room 11, which is easy in assembling. Specifically, in assembling, the inclined abutting surface 252 of the protrusion 25 is guided by the inclined surface 141 so that at least one of the projection 14 and the protrusion 25 is pressed and deformed radially, which allows the protrusion 25 to engage with the projection 14.

The room 11 has a bottom wall 112, the projection 14 and the bottom wall 112 are arranged in interval, and a distance between the bottom wall 112 and the projection 14 is equal to or, preferably, larger than a thickness of the protrusion 25 in the axial direction A, so that it is easy in assembling and the protrusion 25 can be stably positioned.

The projection 14 further includes a first vertical plane 142, and the protrusion 25 further includes a second vertical plane 253. When the projection 14 is engaged within the engaging slot 24, the second vertical plane 253 is remoter from the opening 111 than the first vertical plane 142, and the first vertical plane 142 and the second vertical plane 253 face each other. The first vertical plane 142 and the second vertical plane 253 are preferably perpendicular to a central line C of the hub shell 10, respectively, for bearing large active force in the axial direction A and avoiding easy disengagement of the ratchet ring 20 from the room 11.

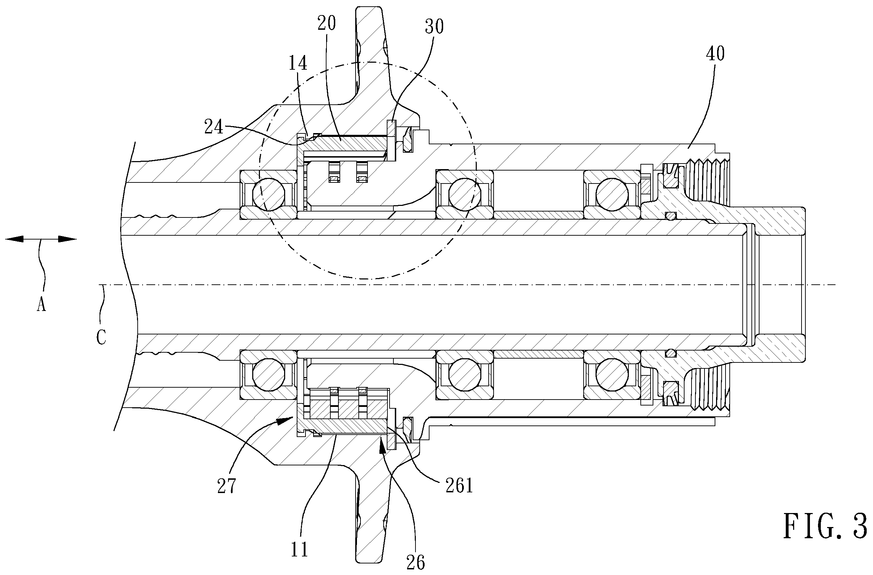

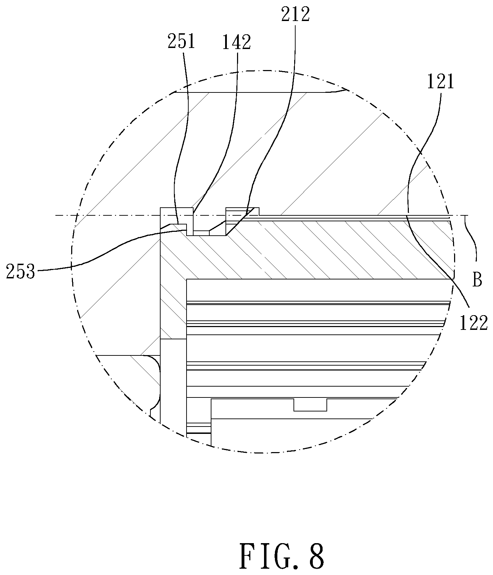

The outer toothed portion 21 includes a plurality of inner recesses 213, the annular toothed portion 12 includes a plurality of outer teeth 121, the plurality of outer teeth 121 and the plurality of inner recesses 213 are engaged with each other, each of the plurality of outer teeth 121 has a boundary B located on and extending axially along an end face 122 of one of the plurality of outer teeth 121, and the end face 251 of the protrusion 25 is more adjacent to the central line C of the hub shell 10 than the boundary B of each of the plurality of outer teeth 121, as shown in Figs. 3 and 8. The outer toothed portion 21 further includes a plurality of engaging teeth 22, the plurality of engaging teeth 22 and the plurality of inner recesses 213 are circumferentially arranged alternatively, and an end of each of the plurality of engaging teeth 22 includes an incline 212 defining the engaging slot 24 with the second vertical plane 253 and corresponding to the inclined surface 141. During assembling of the ratchet ring 20 to the room 11, the protrusion 25 and the outer tooth 121 are free of interfering and blocking.

The hub device 1 further includes a sprocket mounting seat 40, the sprocket mounting seat 40 includes a pawl mounting seat 41 and a plurality of pawls 42, the plurality of pawls 42 are mounted to the pawl mounting seat 41, the ratchet ring 20 further includes an inner toothed portion 23 corresponding to the outer toothed portion 21, the pawl mounting seat 41 is disposed through the inner toothed portion 23, and the plurality of pawls 42 are engaged with the annular toothed portion 12. In the axial direction A, the protrusion 25 is remoter from the opening 111 than the sprocket mounting seat 401. In this embodiment, the inner toothed portion 23 and the outer toothed portion 21 are integrally formed on inner and outer sides of the ratchet ring 20, respectively.

The hub device 1 further includes a blocking member 30, the room 11 further includes an annular trench 15, the blocking member 30 is disposed within the annular trench 15, and the blocking member 30 and the ratchet ring 20 are blocked with each other in the axial direction A. Preferably, the blocking member 30 is annular and includes a notch 33. Specifically, the blocking member 30 is radially deformable relative to the notch 33 so that the blocking member 30 can be stably positioned within the annular trench 15. The annular trench 15 is more adjacent to the opening 111 than the projection 14, the ratchet ring 20 includes a first end portion 26 and a second end portion 27 opposite to the first end portion 26, the first end portion 26 is more adjacent to the opening 111 than the second end portion 27, the blocking member 30 is abutted axially against an end surface 261 of the first end portion 26, the engaging slot 24 is disposed on the second end portion 27, so that the force exerted on the ratchet ring 20 can be distributed on the blocking member 30 and the projection 14, thus preventing the ratchet ring 20 from disengaging from the hub shell 10 and being capable of providing good resistivity against the active force in the axial direction A.

The hub device 1 further includes an axle 50, and the axle 50 is disposed through the hub shell 10, the ratchet ring 20, the blocking member 30 and sprocket mounting seat 40.

## Claims

1. A hub device (1), including:
a hub shell (10), defining an axial direction (A), including a room (11) and a projection (14), the room (11) having an opening (111) open in the axial direction (A), an inner wall of the room (11) being integrally connected with the projection (14), the room (11) further including an annular toothed portion (12), the projection (14) projecting radially within the room (11); and
a ratchet ring (20), including an outer toothed portion (21) and an engaging slot (24) corresponding to the projection (14), wherein the ratchet ring (20) is disposed in the room (11), such that the outer toothed portion (21) is engaged with the annular toothed portion (12) so that the ratchet ring (20) is rotatable with the hub shell (10), the engaging slot (24) being disposed on the ratchet ring (20),
being **characterized in that** the ratchet ring (20) further includes a protrusion (25) radially protruding outward, the protrusion (25) and the outer toothed portion (21) form the engaging slot (24) therebetween, wherein, when the outer toothed portion (21) is engaged with the annular toothed portion (12), the projection (14) is engaged radially within the engaging slot (24) and abutted radially against the hub shell (10); and the protrusion (25) and the projection (14) are axially blocked with each other.

2. The hub device (1) of claim 1, wherein the outer toothed portion (21) includes a plurality of inner recesses (213), the annular toothed portion (12) includes a plurality of outer teeth (121), the plurality of outer teeth (121) and the plurality of inner recesses (213) are engaged with each other, each of the plurality of outer teeth (121) defines a boundary (B) located on and extending axially along an end face (122) of one of the plurality of outer teeth (121), and an end face (251) of the protrusion (25) is more adjacent to a central line (C) of the hub shell (10) than the boundary (B) of each of the plurality of outer teeth (121).

3. The hub device (1) of claim 1, wherein the projection (14) includes an inclined surface (141) which extends inclinedly toward the opening (111), the protrusion (25) includes an inclined abutting surface (252), and the inclined abutting surface (252) extends inclinedly in a direction away from the opening (111) and is abuttable against the inclined surface (141) in the axial direction (A).

4. The hub device (1) of claim 3, wherein the inclined surface (141) and a first horizontal reference line (D1) which is parallel to the axial direction (A) intersect and define a first included angle (θ1) therebetween, the inclined abutting surface (252) and a second horizontal reference line (D2) which is parallel to the axial direction (A) intersect and define a second included angle (θ2) therebetween, the first included angle (θ1) is larger than the second included angle (θ2), and the first included angle (θ1) and the second included angle (θ2) are smaller than 45 degrees.

5. The hub device (1) of claim 3, wherein the protrusion (25) further includes an end face (251) transverse to the inclined abutting surface (252), the projection (14) further includes a bottom end face (143) transverse to the inclined surface (141), the protrusion (25) defines a first line (2) located on and extending axially along the end face (251), the projection (14) defines a second line (3) located on and extending axially along the bottom end face (143), and a distance (60) between the first line (2) and the second line (3) is between 0.10 mm to 0.20 mm.

6. The hub device (1) of claim 1, wherein further includes a sprocket mounting seat (40), the sprocket mounting seat (40) includes a pawl mounting seat (41) and a plurality of pawls (42), the plurality of pawls (42) are mounted to the pawl mounting seat (41), the ratchet ring (20) further includes an inner toothed portion (23) corresponding to the outer toothed portion (21), the pawl mounting seat (41) is disposed through the inner toothed portion (23), and the plurality of pawls (42) are engaged with the annular toothed portion (12); in the axial direction (A), the protrusion (25) is remoter from the opening (111) than the sprocket mounting seat (40).

7. The hub device (1) of claim 1, further including a blocking member (30), wherein the room (11) further includes an annular trench (15), the blocking member (30) is disposed within the annular trench (15), and the blocking member (30) and the ratchet ring (20) are blocked with each other in the axial direction (A).

8. The hub device (1) of claim 7, wherein the annular trench (15) is more adjacent to the opening (111) than the projection (14), the ratchet ring (20) includes a first end portion (26) and a second end portion (27) opposite to the first end portion (26), the first end portion (26) is more adjacent to the opening (111) than the second end portion (27), the blocking member (30) is abutted axially against the first end portion (26), and the engaging slot (24) is disposed on the second end portion (27).

9. The hub device (1) of claim 5, wherein the hub shell (10) defines a central axis parallel to the axial direction (A), the projection (14) is an annular flange around the central axis, and the engaging slot (24) an annular concave around the central axis; the hub shell (10) is made of a first metal material, the ratchet ring (20) is made of a second metal material, and the hardness of the second metal material is larger than the hardness of the first metal material; the inclined surface (141) and a first horizontal reference line (D1) which is parallel to the axial direction (A) intersect and define a first included angle (θ1) therebetween, the inclined abutting surface (252) and a second horizontal reference line (D2) which is parallel to the axial direction (A) intersect and define a second included angle (θ2) therebetween, and the first included angle (θ1) is larger than the second included angle (θ2); the first included angle (θ1) is smaller than 35 degrees, and the second included angle (θ2) is smaller than 30 degrees; the projection (14) further includes a first vertical plane (142), the protrusion (25) further includes a second vertical plane (253); when the projection (14) is engaged within the engaging slot (24), the second vertical plane (253) is remoter from the opening (111) than the first vertical plane (142), and the first vertical plane (142) and the second vertical plane (253) face each other; the outer toothed portion (21) includes a plurality of inner recesses (213), the annular toothed portion (12) includes a plurality of outer teeth (121), the plurality of outer teeth (121) and the plurality of inner recesses (213) are engaged with each other, each of the plurality of outer teeth (121) has a boundary (B) located on and extending axially along an end face (122) of one of the plurality of outer teeth (121), and an end face (251) of the protrusion (25) is more adjacent to a central line (C) of the hub shell (10) than the boundary (B) of each of the plurality of outer teeth (121); the outer toothed portion (21) further includes a plurality of engaging teeth (22), the plurality of engaging teeth (22) and the plurality of inner recesses (213) are circumferentially arranged alternatively, and an end of each of the plurality of engaging teeth (22) includes an incline (212) defining the engaging slot (24) with the second vertical plane (253) and corresponding to the inclined surface (141); the hub device (1) further includes a sprocket mounting seat (40), the sprocket mounting seat (40) includes a pawl mounting seat (41) and a plurality of pawls (42), the plurality of pawls (42) are mounted to the pawl mounting seat (41), the ratchet ring (20) further includes an inner toothed portion (23) corresponding to the outer toothed portion (21), the pawl mounting seat (41) is disposed through the inner toothed portion (23), and the plurality of pawls (42) are engaged with the annular toothed portion (12); in the axial direction (A), the protrusion (25) is remoter from the opening (111) than the sprocket mounting seat (40); the hub device (1) further includes a blocking member (30), the room (11) further includes an annular trench (15), the blocking member (30) is disposed within the annular trench (15), and the blocking member (30) and the ratchet ring (20) are blocked with each other in the axial direction (A); the annular trench (15) is more adjacent to the opening (111) than the projection (14), the ratchet ring (20) includes a first end portion (26) and a second end portion (27) opposite to the first end portion (26), the first end portion (26) is more adjacent to the opening (111) than the second end portion (27), the blocking member (30) is abutted axially against the first end portion (26), and the engaging slot (24) is disposed on the second end portion (27); the blocking member (30) is annular and includes a notch (33) radially opened; the hub device (1) further includes an axle (50), and the axle (50) is disposed through the hub shell (10), the ratchet ring (20), the blocking member (30) and sprocket mounting seat (40); the protrusion (25) is protrusive radially beyond an outer circumferential surface of the ratchet ring (20) in an extent smaller than an extent in which the projection (14) projects radially from an inner surface of the room (11); the room (11) has a bottom wall (112), the projection (14) and the bottom wall (112) are arranged in interval, and a distance (60) between the bottom wall (112) and the projection (14) is equal to or larger than a thickness of the protrusion (25) in the axial direction (A).

## Patentansprüche

1. Nabenvorrichtung (1), welche umfasst:
ein Nabengehäuse (10), das eine axiale Richtung (A) definiert und einen Raum (11) und einen Vorsprung (14) umfasst, wobei der Raum (11) eine Öffnung (111) aufweist, die in der axialen Richtung (A) offen ist, wobei eine Innenwand des Raums (11) integral mit dem Vorsprung (14) verbunden ist, der Raum (11) ferner einen ringförmigen gezahnten Abschnitt (12) umfasst und der Vorsprung (14) radial in den Raum (11) hineinragt; und
einen Ratschenring (20), der einen äußeren gezahnten Abschnitt (21) und einen mit dem Vorsprung (14) korrespondierenden Eingriffsschlitz (24) umfasst, wobei der Ratschenring (20) derart in dem Raum (11) angeordnet ist, dass der äußere gezahnte Abschnitt (21) mit dem ringförmigen gezahnten Abschnitt (12) in Eingriff steht, sodass der Ratschenring (20) mit dem Nabengehäuse (10) drehbar ist, wobei der Eingriffsschlitz (24) an dem Ratschenring (20) angeordnet ist,
**dadurch gekennzeichnet, dass**
der Ratschenring (20) ferner einen radial nach außen vorstehenden Überstand (25) umfasst, wobei der Überstand (25) und der äußere gezahnte Abschnitt (21) dazwischen den Eingriffsschlitz (24) bilden, wobei, wenn der äußere gezahnte Abschnitt (21) mit dem ringförmigen gezahnten Abschnitt (12) ineinandergreift, der Vorsprung (14) radial in den Eingriffsschlitz (24) eingreift und radial an dem Nabengehäuse (10) anliegt; und der Überstand (25) und der Vorsprung (14) axial miteinander blockiert sind.

2. Nabenvorrichtung (1) nach Anspruch 1, bei welcher der äußere gezahnte Abschnitt (21) eine Vielzahl von inneren Aussparungen (213) umfasst, der ringförmige gezahnte Abschnitt (12) eine Vielzahl von äußeren Zähnen (121) umfasst, wobei die Vielzahl von äußeren Zähnen (121) und die Vielzahl von inneren Aussparungen (213) miteinander in Eingriff stehen, wobei jeder der Vielzahl von äußeren Zähnen (121) eine Grenze (B) definiert, die sich an einer Endfläche (122) von einem der Vielzahl von äußeren Zähnen (121) befindet und axial an dieser entlang erstreckt, und eine Endfläche (251) des Überstands (25) liegt näher an einer Mittellinie (C) des Nabengehäuses (10) als die Grenze (B) von jedem der Vielzahl von äußeren Zähnen (121).

3. Nabenvorrichtung (1) nach Anspruch 1, bei welcher der Vorsprung (14) eine schräge Fläche (141) umfasst, die sich schräg in Richtung der Öffnung (111) erstreckt, der Überstand (25) eine schräge Anschlagfläche (252) umfasst und die schräge Anschlagfläche (252) sich schräg in einer Richtung weg von der Öffnung (111) erstreckt und in der axialen Richtung (A) an die schräge Fläche (141) anlegbar ist.

4. Nabenvorrichtung (1) nach Anspruch 3, bei welcher die schräge Fläche (141) und eine erste horizontale Referenzlinie (D1), welche parallel zu der axialen Richtung (A) ist, sich schneiden und einen ersten eingeschlossenen Winkel (θ1) dazwischen definieren, die schräge Anschlagfläche (252) und eine zweite horizontale Referenzlinie (D2), welche parallel zu der axialen Richtung (A) ist, sich schneiden und einen zweiten eingeschlossenen Winkel (θ2) dazwischen definieren, wobei der erste eingeschlossene Winkel (θ1) größer ist als der zweite eingeschlossene Winkel (θ2), und der erste eingeschlossene Winkel (θ1) und der zweite eingeschlossene Winkel (θ2) kleiner sind als 45 Grad.

5. Nabenvorrichtung (1) nach Anspruch 3, bei welcher der Überstand (25) ferner eine Endfläche (251) umfasst, die quer zu der schrägen Anschlagfläche (252) ist, der Vorsprung (14) ferner eine untere Endfläche (143) umfasst, die quer zu der schrägen Fläche (141) ist, der Überstand (25) eine erste Linie (2) definiert, die sich an der Endfläche (251) befindet und sich axial an dieser entlang erstreckt, der Vorsprung (14) eine zweite Linie (3) definiert, die sich an der unteren Endfläche (143) befindet und sich axial an dieser entlang erstreckt, und ein Abstand (60) zwischen der ersten Linie (2) und der zweiten Linie (3) beträgt zwischen 0,10 mm und 0,20 mm.

6. Nabenvorrichtung (1) nach Anspruch 1, welche ferner einen Kettenradmontagesitz (40) umfasst, wobei der Kettenradmontagesitz (40) einen Sperrklinkenmontagesitz (41) und eine Vielzahl von Sperrklinken (42) umfasst, wobei die Vielzahl von Sperrklinken (42) an dem Sperrklinkenmontagesitz (41) befestigt sind, wobei der Ratschenring (20) ferner einen inneren gezahnten Abschnitt (23) umfasst, der mit dem äußeren gezahnten Abschnitt (21) korrespondiert, wobei der Sperrklinkenmontagesitz (41) durch den inneren gezahnten Abschnitt (23) angeordnet ist und die Vielzahl von Sperrklinken (42) mit dem ringförmigen gezahnten Abschnitt (12) in Eingriff stehen; wobei in der axialen Richtung (A) der Überstand (25) weiter von der Öffnung (111) entfernt ist als der Kettenradmontagesitz (40).

7. Nabenvorrichtung (1) nach Anspruch 1, welche ferner ein Blockierelement (30) umfasst, wobei der Raum (11) ferner einen ringförmigen Graben (15) umfasst, das Blockierelement (30) innerhalb des ringförmigen Grabens (15) angeordnet ist und das Blockierelement (30) und der Ratschenring (20) in der axialen Richtung (A) miteinander blockiert sind.

8. Nabenvorrichtung (1) nach Anspruch 7, bei welcher der ringförmige Graben (15) näher an der Öffnung (111) liegt als der Vorsprung (14), der Ratschenring (20) einen ersten Endabschnitt (26) und einen zweiten Endabschnitt (27) umfasst, der dem ersten Endabschnitt (26) gegenüberliegt, wobei der erste Endabschnitt (26) näher an der Öffnung (111) liegt als der zweite Endabschnitt (27), wobei das Blockierelement (30) axial an dem ersten Endabschnitt (26) anliegt, und der Eingriffsschlitz (24) an dem zweiten Endabschnitt (27) angeordnet ist.

9. Nabenvorrichtung (1) nach Anspruch 5, bei welcher das Nabengehäuse (10) eine Mittelachse definiert, die parallel zu der axialen Richtung (A) ist, wobei der Vorsprung (14) ein ringförmiger Flansch um die Mittelachse ist, und der Eingriffsschlitz (24) eine ringförmige Höhlung um die Mittelachse ist; wobei das Nabengehäuse (10) aus einem ersten Metallmaterial gefertigt ist, der Ratschenring (20) aus einem zweiten Metallmaterial gefertigt ist und die Härte des zweiten Metallmaterials größer ist als die Härte des ersten Metallmaterials; wobei die schräge Fläche (141) und eine erste horizontale Referenzlinie (D1), welche parallel zu der axialen Richtung (A) ist, sich schneiden und einen ersten eingeschlossenen Winkel (θ1) dazwischen definieren, die schräge Anschlagfläche (252) und eine zweite horizontale Referenzlinie (D2), welche parallel zu der axialen Richtung (A) ist, sich schneiden und einen zweiten eingeschlossenen Winkel (θ2) dazwischen definieren, und der erste eingeschlossene Winkel (θ1) größer ist als der zweite eingeschlossene Winkel (θ2); der erste eingeschlossene Winkel (θ1) kleiner ist als 35 Grad, und der zweite eingeschlossene Winkel (θ2) kleiner ist als 30 Grad; wobei der Vorsprung (14) ferner eine erste vertikale Ebene (142) umfasst, der Überstand (25) ferner eine zweite vertikale Ebene (253) umfasst; wobei, wenn der Vorsprung (14) in den Eingriffsschlitz (24) eingreift, die zweite vertikale Ebene (253) weiter von der Öffnung (111) entfernt ist als die erste vertikale Ebene (142), und die erste vertikale Ebene (142) und die zweite vertikale Ebene (253) einander zugewandt sind; der äußere gezahnte Abschnitt (21) umfasst eine Vielzahl von inneren Aussparungen (213), der ringförmige gezahnte Abschnitt (12) umfasst eine Vielzahl von äußeren Zähnen (121), die Vielzahl von äußeren Zähnen (121) und die Vielzahl von inneren Aussparungen (213) stehen miteinander in Eingriff, jeder der Vielzahl von äußeren Zähnen (121) hat eine Grenze (B), die sich an einer Endfläche (122) von einem der Vielzahl von äußeren Zähnen (121) befindet und axial an dieser entlang erstreckt, und eine Endfläche (251) des Überstands (25) näher an einer Mittellinie (C) des Nabengehäuses (10) liegt als die Grenze (B) von jedem der Vielzahl von äußeren Zähnen (121); der äußere gezahnte Abschnitt (21) umfasst ferner eine Vielzahl von Eingriffszähnen (22), wobei die Vielzahl von Eingriffszähnen (22) und die Vielzahl von inneren Aussparungen (213) abwechselnd in Umfangsrichtung angeordnet sind, und ein Ende von jedem der Vielzahl von Eingriffszähnen (22) eine Schräge (212) aufweist, die den Eingriffsschlitz (24) mit der zweiten vertikalen Ebene (253) definiert und mit der schrägen Fläche (141) korrespondiert; wobei die Nabenvorrichtung (1) ferner einen Kettenradmontagesitz (40) umfasst, wobei der Kettenradmontagesitz (40) einen Sperrklinkenmontagesitz (41) und eine Vielzahl von Sperrklinken (42) umfasst, wobei die Vielzahl von Sperrklinken (42) an dem Sperrklinkenmontagesitz (41) befestigt sind, wobei der Ratschenring (20) ferner einen inneren gezahnten Abschnitt (23) umfasst, der mit dem äußeren gezahnten Abschnitt (21) korrespondiert, wobei der Sperrklinkenmontagesitz (41) durch den inneren gezahnten Abschnitt (23) angeordnet ist, und die Vielzahl von Sperrklinken (42) steht mit dem ringförmigen gezahnten Abschnitt (12) in Eingriff; in der axialen Richtung (A) ist der Überstand (25) weiter von der Öffnung (111) entfernt als der Kettenradmontagesitz (40); wobei die Nabenvorrichtung (1) ferner ein Blockierelement (30) umfasst, der Raum (11) ferner einen ringförmigen Graben (15) umfasst, das Blockierelement (30) ist innerhalb des ringförmigen Grabens (15) angeordnet, und das Blockierelement (30) und der Ratschenring (20) blockieren sich gegenseitig in der axialen Richtung (A); der ringförmige Graben (15) befindet sich näher an der Öffnung (111) als der Vorsprung (14), der Ratschenring (20) umfasst einen ersten Endabschnitt (26) und einen zweiten Endabschnitt (27), der dem ersten Endabschnitt (26) gegenüberliegt, der erste Endabschnitt (26) befindet sich näher an der Öffnung (111) als der zweite Endabschnitt (27), das Blockierelement (30) liegt axial an dem ersten Endabschnitt (26) an, und der Eingriffsschlitz (24) ist an dem zweiten Endabschnitt (27) angeordnet; das Blockierelement (30) ist ringförmig und umfasst eine radial geöffnete Nut (33); die Nabenvorrichtung (1) umfasst ferner eine Achse (50), und die Achse (50) ist durch das Nabengehäuse (10), den Ratschenring (20), das Blockierelement (30) und Kettenradmontagesitz (40) angeordnet; wobei der Überstand (25) radial über eine äußere Umfangsfläche des Ratschenrings (20) in einem Ausmaß hinausragt, das kleiner ist als das Ausmaß, in dem der Vorsprung (14) radial von einer Innenfläche des Raums (11) vorsteht; wobei der Raum (11) eine untere Wand (112) hat, wobei der Vorsprung (14) und die untere Wand (112) beabstandet angeordnet sind, und ein Abstand (60) zwischen der unteren Wand (112) und dem Vorsprung (14) gleich groß oder größer ist als eine Dicke des Überstands (25) in der axialen Richtung (A).

## Revendications

1. Dispositif de moyeu (1), incluant :
un carter de moyeu (10), définissant une direction axiale (A), incluant une chambre (11) et une saillie (14), la chambre (11) présentant une ouverture (111) ouverte dans la direction axiale (A), une paroi intérieure de la chambre (11) étant solidaire de la saillie (14), la chambre (11) incluant en outre une partie dentée annulaire (12), la saillie (14) faisant saillie radialement à l'intérieur de la chambre (11) ; et
une bague à cliquet (20), incluant une partie dentée extérieure (21) et une fente de mise en prise (24) correspondant à la saillie (14), dans lequel la bague à cliquet (20) est disposée dans la chambre (11), de sorte que la partie dentée extérieure (21) soit mise en prise avec la partie dentée annulaire (12) afin que la bague à cliquet (20) puisse tourner avec le carter de moyeu (10), la fente de mise en prise (24) étant disposée sur la bague à cliquet (20),
et étant **caractérisé en ce que**
la bague à cliquet (20) inclut en outre une saillie (25) faisant saillie radialement vers l'extérieur, la saillie (25) et la partie dentée extérieure (21) formant la fente de mise en prise (24) entre elles, dans lequel, lorsque la partie dentée extérieure (21) est mise en prise avec la partie dentée annulaire (12), la saillie (14) est mise en prise radialement dans la fente de mise en prise (24) et bute radialement contre le carter de moyeu (10) ; et la saillie (25) et la saillie (14) sont bloquées axialement l'une avec l'autre.

2. Dispositif de moyeu (1) selon la revendication 1, dans lequel la partie dentée extérieure (21) inclut une pluralité d'évidements intérieurs (213), la partie dentée annulaire (12) inclut une pluralité de dents extérieures (121), la pluralité de dents extérieures (121) et la pluralité d'évidements intérieurs (213) sont mis en prise les unes avec les autres, chacune de la pluralité de dents extérieures (121) définit une limite (B) située sur et s'étendant axialement le long d'une face d'extrémité (122) de l'une de la pluralité de dents extérieures (121), et une face d'extrémité (251) de la saillie (25) est plus adjacente à une ligne centrale (C) du carter de moyeu (10) que la limite (B) de chacune de la pluralité de dents extérieures (121).

3. Dispositif de moyeu (1) selon la revendication 1, dans lequel la saillie (14) inclut une surface inclinée (141) qui s'étend de manière inclinée vers l'ouverture (111), la saillie (25) inclut une surface de butée inclinée (252), et la surface de butée inclinée (252) s'étend de manière inclinée dans une direction s'éloignant de l'ouverture (111) et peut venir en butée contre la surface inclinée (141) dans la direction axiale (A).

4. Dispositif de moyeu (1) selon la revendication 3, dans lequel la surface inclinée (141) et une première ligne de référence horizontale (D1) qui est parallèle à la direction axiale (A) se croisent et définissent entre elles un premier angle inclus (θ1), la surface de butée inclinée (252) et une seconde ligne de référence horizontale (D2) qui est parallèle à la direction axiale (A) se croisent et définissent entre elles un second angle inclus (θ2), le premier angle inclus (θ1) est plus grand que le second angle inclus (θ2), et le premier angle inclus (θ1) et le second angle inclus (θ2) sont inférieurs à 45 degrés.

5. Dispositif de moyeu (1) selon la revendication 3, dans lequel la saillie (25) inclut en outre une face d'extrémité (251) transversale à la surface de butée inclinée (252), la saillie (14) inclut en outre une face d'extrémité inférieure (143) transversale à la surface inclinée (141), la saillie (25) définit une première ligne (2) située sur et s'étendant axialement le long de la face d'extrémité (251), la saillie (14) définit une seconde ligne (3) située sur et s'étendant axialement le long de la face d'extrémité inférieure (143), et une distance (60) entre la première ligne (2) et la seconde ligne (3) est comprise entre 0,10 mm et 0,20 mm.

6. Dispositif de moyeu (1) selon la revendication 1, incluant en outre un siège de montage de pignon (40), le siège de montage de pignon (40) incluant un siège de montage de cliquet (41) et une pluralité de cliquets (42), la pluralité de cliquets (42) étant montés sur le siège de montage de cliquet (41), la bague à cliquet (20) incluant en outre une partie dentée intérieure (23) correspondant à la partie dentée extérieure (21), le siège de montage de cliquet (41) étant disposé à travers la partie dentée intérieure (23), et la pluralité de cliquets (42) étant mis en prise avec la partie dentée annulaire (12) ; dans la direction axiale (A), la saillie (25) étant plus éloignée de l'ouverture (111) que le siège de montage de pignon (40).

7. Dispositif de moyeu (1) selon la revendication 1, incluant en outre un élément de blocage (30), dans lequel la chambre (11) inclut en outre une tranchée annulaire (15), l'élément de blocage (30) est disposé à l'intérieur de la tranchée annulaire (15), et l'élément de blocage (30) et la bague à cliquet (20) sont bloqués l'un avec l'autre dans la direction axiale (A).

8. Dispositif de moyeu (1) selon la revendication 7, dans lequel la tranchée annulaire (15) est plus adjacente à l'ouverture (111) que la saillie (14), la bague à cliquet (20) inclut une première partie d'extrémité (26) et une seconde partie d'extrémité (27) opposée à la première partie d'extrémité (26), la première partie d'extrémité (26) est plus adjacente à l'ouverture (111) que la seconde partie d'extrémité (27), l'élément de blocage (30) est en butée axialement contre la première partie d'extrémité (26), et la fente de mise en prise (24) est disposée sur la seconde partie d'extrémité (27).

9. Dispositif de moyeu (1) selon la revendication 5, dans lequel le carter de moyeu (10) définit un axe central parallèle à la direction axiale (A), la saillie (14) est une bride annulaire autour de l'axe central, et la fente de mise en prise (24) est une concavité annulaire autour de l'axe central ; le carter de moyeu (10) est constituée d'un premier matériau métallique, la bague à cliquet (20) est constituée d'un second matériau métallique, et la dureté du second matériau métallique est supérieure à la dureté du premier matériau métallique ; la surface inclinée (141) et une première ligne de référence horizontale (D1) qui est parallèle à la direction axiale (A) se croisent et définissent entre elles un premier angle inclus (θ1), la surface de butée inclinée (252) et une seconde ligne de référence horizontale (D2) qui est parallèle à la direction axiale (A) se croisent et définissent entre elles un second angle inclus (θ2), et le premier angle inclus (θ1) est supérieur au second angle inclus (θ2) ; le premier angle inclus (θ1) est inférieur à 35 degrés, et le second angle inclus (θ2) est inférieur à 30 degrés ; la saillie (14) inclut en outre un premier plan vertical (142), la saillie (25) inclut en outre un second plan vertical (253) ; lorsque la saillie (14) est mise en prise dans la fente de mise en prise (24), le second plan vertical (253) est plus éloigné de l'ouverture (111) que le premier plan vertical (142), et le premier plan vertical (142) et le second plan vertical (253) se font face ; la partie dentée extérieure (21) inclut une pluralité d'évidements intérieurs (213), la partie dentée annulaire (12) inclut une pluralité de dents extérieures (121), la pluralité de dents extérieures (121) et la pluralité d'évidements intérieurs (213) sont en prise les unes avec les autres, chacune de la pluralité de dents extérieures (121) présente une limite (B) située sur et s'étendant axialement le long d'une face d'extrémité (122) de l'une de la pluralité de dents extérieures (121), et une face d'extrémité (251) de la saillie (25) est plus adjacente à une ligne centrale (C) du carter de moyeu (10) que la limite (B) de chacune de la pluralité de dents extérieures (121) ; la partie dentée extérieure (21) inclut en outre une pluralité de dents de mise en prise (22), la pluralité de dents de mise en prise (22) et la pluralité d'évidements intérieurs (213) sont disposés de façon alternée de manière circonférentielle, et une extrémité de chacune de la pluralité de dents de mise en prise (22) inclut une inclinaison (212) définissant la fente de mise en prise (24) avec le second plan vertical (253) et correspondant à la surface inclinée (141) ; le dispositif de moyeu (1) inclut en outre un siège de montage de pignon (40), le siège de montage de pignon (40) inclut un siège de montage de cliquet (41) et une pluralité de cliquets (42), la pluralité de cliquets (42) sont montés sur le siège de montage de cliquet (41), la bague à cliquet (20) inclut en outre une partie dentée intérieure (23) correspondant à la partie dentée extérieure (21), le siège de montage de cliquet (41) est disposé à travers la partie dentée intérieure (23), et la pluralité de cliquets (42) sont mis en prise avec la partie dentée annulaire (12) ; dans la direction axiale (A), la saillie (25) est plus éloignée de l'ouverture (111) que le siège de montage de pignon (40) ; le dispositif de moyeu (1) inclut en outre un élément de blocage (30), la chambre (11) inclut en outre une tranchée annulaire (15), l'élément de blocage (30) est disposé à l'intérieur de la tranchée annulaire (15), et l'élément de blocage (30) et la bague à cliquet (20) sont bloqués l'un avec l'autre dans la direction axiale (A) ; la tranchée annulaire (15) est plus adjacente à l'ouverture (111) que la saillie (14), la bague à cliquet (20) inclut une première partie d'extrémité (26) et une seconde partie d'extrémité (27) opposée à la première partie d'extrémité (26), la première partie d'extrémité (26) est plus adjacente à l'ouverture (111) que la seconde partie d'extrémité (27), l'élément de blocage (30) est en butée axialement contre la première partie d'extrémité (26), et la fente de mise en prise (24) est disposée sur la seconde partie d'extrémité (27) ; l'élément de blocage (30) est annulaire et inclut une encoche (33) ouverte radialement ; le dispositif de moyeu (1) inclut en outre un axe (50), et l'axe (50) est disposé à travers le carter de moyeu (10), la bague à cliquet (20), l'élément de blocage (30) et le siège de montage de pignon (40) ; la saillie (25) fait saillie radialement au-delà d'une surface circonférentielle extérieure de la bague à cliquet (20) dans une étendue plus petite qu'une étendue dans lequel la saillie (14) fait saillie radialement à partir d'une surface intérieure de la chambre (11) ; la chambre (11) présente une paroi inférieure (112), la saillie (14) et la paroi inférieure (112) sont agencées à intervalle, et une distance (60) entre la paroi inférieure (112) et la saillie (14) est supérieure ou égale à une épaisseur de la saillie (25) dans la direction axiale (A).
